# EUROPÄISCHE PATENTSCHRIFT

(11) **EP 2 276 228 B1**
(45) Veröffentlichungstag und Bekanntmachung des Hinweises auf die Patenterteilung: **03.05.2017**
(21) Anmeldenummer: 10169757.1
(22) Anmeldetag: 16.07.2010
(51) Int. Cl.: H04M 3/523, G06Q 10/00, G07C 11/00

(54) **Warteschlangen-Online-Support**
Online queue support
Support en ligne de files d'attente

(30) Priorität: 17.07.2009 DE 102009033748
(43) Veröffentlichungstag der Anmeldung: 19.01.2011
(73) Patentinhaber: Deutsche Telekom AG, 53113 Bonn (DE)
(72) Erfinder: Küller, Jürgen, 53757, St. Augustin (DE)
(74) Vertreter: Braun-Dullaeus, Karl-Ulrich

(56) Entgegenhaltungen:
- JP-A- 2002 312 474
- US-A1- 2005 157 865

## Beschreibung

Die Erfindung betrifft ein Verfahren zur Kommunikation eines Anbieters von Waren und/oder Dienstleistungen mit einem Wartenden, bei dem die Kommunikation über mindestens eine Telekommunikationsverbindung erfolgt und eine Übertragung der voraussichtlichen Wartezeit zum Wartenden umfasst. Die Erfindung betrifft ferner eine Datenkommunikationsanordnung zur Durchführung des Verfahrens sowie die Verwendung der Datenkommunikationsanordnung.

In vielen Dienstleistungsbereichen mit Kundenkontakt, in denen mit größeren Wartezeiten zu rechnen ist (z.B. in Meldeämtern, KFZ-Zulassungsstellen, Warenausgabestellen oder Bibliotheken), kann der Kunde ein Märkchen mit einer fortlaufenden Nummer ziehen. Er braucht dann nicht in einer Schlange anzustehen, sondern ein Warteschlangensystem verwaltet die Wartenden und die Bearbeiter. Eine Anzeigetafel informiert den Kunden, wenn er an der Reihe ist. Die Wartezeit kann der Kunde aber dennoch nicht sinnvoll gestalten, da er nur dann ein Feedback zum Abbau der Warteschlange erhält, wenn er im Sichtbereich der Anzeigetafel bleibt.

Zur Lösung dieses Problems wurde in der DE-B3-103 37 603 bereits vorgeschlagen, den Kunden per SMS zu benachrichtigen, kurz bevor er an der Reihe ist. Dieses Verfahren hat aber mehrere signifikante Nachteile. Zum Einen liegt dem Dienstleister in der Regel nicht die Mobilfunk-Rufnummer des Wartenden vor, so dass diese Nummer zuvor von Hand erfasst werden muss. Zum Anderen müssen der Rufnummer des Wartenden von Hand weitere Informationen zugeordnet werden, wie beispielsweise die fortlaufende Warteschlangen-Nummer, eine Dienstleistungskennung (bei mehreren Warteschlangen zu unterschiedlichen Dienstleistungen) oder eine Standortkennung bei mehreren Zweigstellen. Darüber hinaus kann der Kunde während der Wartezeit nicht "in time" nachverfolgen, wie schnell sich die Warteschlange abbaut. Eine zum Zeitpunkt der Nummernvergabe aus den zurückliegenden Bearbeitungszeiten prognostizierte Zeit kann sich im Laufe der Wartezeit erheblich verändern. Dass heißt, der Kunde muss stets mit einer überraschenden, vorzeitigen Benachrichtigung rechnen und kann seinen Aktionsradius nicht flexibel gestalten.

ausgehändigen Pager oder eine hinterlegte Mobilfunknummer bekommt. Alternativ erhält er einen RFID, den er an einem Terminal ausiesen lasen kann und dort seine Wartezeit angezeigt bekommt.

Es ist Aufgabe der Erfindung, ein Verfahren und eine Datenkommunikationsanordnung bereitzustellen, weiche die genannten Nachteile vermeidet und eine zuverlässige, flexible und jeder Zeit aktuelle Information eines Wartenden bezüglich der voraussichtlichen Wartezeit gewährleistet.

Die Aufgabe wird erfindungsgemäß durch ein Verfahren der eingangs genannten Art gelöst, bei dem der Wartende mindestens eine codierte Information decodiert, die Telekommunikationsverbindung mittels der decodierten Information herstellt, Daten über die Telekommunikationsverbindung versendet und die Übertragung der voraussichtlichen Wartezeit zum Wartenden anhand dieser Daten erfolgt. Erfindungsgemäß decodiert die wartende Person eine codierte Information, die sie vorzugsweise vom Anbieter erhalten bzw. in den Räumlichkeiten des Anbieters erfasst hat. Anhand der decodierten Information kann die wartende Person dann eine Telekommunikationsverbindung zum Anbieter herstellen, über die sie spezifische Daten an den Anbieter versenden kann. Anhand dieser spezifischen Daten kann der Anbieter die voraussichtliche Wartezeit der wartenden Person ermitteln und diese dann über die Telekommunikationsverbindung an die wartende Person übermitteln. Der Daten- und/oder Informationsaustausch kann dabei permanent, d.h. über eine Art Standleitung, oder zu einem beliebigen Zeitpunkt auf Abruf erfolgen. Vorzugsweise wird die Information bezüglich der Wartezeit mehrfach in beliebigen Abständen durch das Versenden der spezifischen Daten durch die wartende Person abgefragt. Durch das erfindungsgemäße Verfahren kann eine wartende Person während der Wartezeit "in time" verfolgen, wie schnell sich die Warteschlange abbaut und wann sie sich wieder beim Anbieter der Waren und/oder Dienstleistungen einfinden muss. Folglich ist die wartende Person zu jeder Zeit über ihre ungefähr verbleibende Wartezeit informiert, so dass sie ihren Aktionsradius flexibel gestalten und die Wartezeit sinnvoll nutzen kann.

Vorzugsweise umfasst die decodierte Information die nötigen Informationen zur Herstellung der Telekommunikationsverbindung mit dem Anbieter und die Daten zur Ermittlung der Wartezeit. Die Informationen zur Herstellung der Telekommunikationsverbindung können dabei insbesondere die Adresse des Anbieters, beispielsweise die Adresse innerhalb eines Netzwerkes (Netzkennung oder URL= Uniform Resource Locator), umfassen. Die Daten zur Ermittlung der Wartezeit umfassen beispielsweise den Zeitpunkt der Ausgabe der codierten Information und/oder eine fortlaufende Nummer, welche der Position des Wartenden innerhalb der Warteschlange entspricht.

Die codierte Information kann dem Wartenden durch den Anbieter und/oder beim Anbieter, vorzugsweise optisch lesbar, zur Verfügung gestellt werden. So kann die codierte Information beispielsweise ausgedruckt oder auf einem Display bzw. Monitor angezeigt werden. Alternativ kann die codierte Information auch mittels eines geeigneten Transponders, vorzugsweise eines RFID-Elements, bereitgestellt werden.

Vorzugsweise erfasst der Wartende die codierte Information in digitaler Form, so dass sie mittels Datenverarbeitung automatisch decodiert werden kann. Zu diesem Zweck verwendet die wartende Person vorzugsweise ein geeignetes Lesegerät, beispielsweise einen Scanner, eine Kamera oder ein RFID-Lesegerät.

In besonders vorteilhafter Ausgestaltung der Erfindung ist vorgesehen, dass die codierte Information in einem zweidimensionalen Code, vorzugsweise einem QR-Code, abgelegt ist. Auf diese Weise wird eine sichere und effiziente Erfassung der Information sowie eine standardisierte Verarbeitung derselben ermöglicht.

In weiterer vorteilhafter Ausgestaltung der Erfindung ist vorgesehen, dass die Telekommunikationsverbindung eine Netzwerkverbindung ist. Vorzugsweise ist die Netzwerkverbindung eine Intranet- oder Internetverbindung, so dass der Daten- bzw. Informationsaustausch zu jeder Zeit "in time" erfolgen kann. Die Intranetverbindung wird vorzugsweise vom Anbieter der Waren und/oder Dienstleistungen zur Verfügung gestellt. Es können also bereits vorhandene interne Netzwerke genutzt werden, um das erfindungsgemäße Verfahren durchzuführen. Durch die Verwendung einer Internetverbindung kann beispielsweise die Flexibilität des Verfahrens erhöht werden. Die Netzwerkverbindung kann über Netzwerkkabel hergestellt oder drahtlos realisiert werden. So kann die Netzwerkverbindung beispielsweise über abgeschirmte Kabel innerhalb der Räumlichkeiten des Anbieters hergestellt werden, wobei die Abfrage der voraussichtlichen Wartezeit durch die wartende Person an speziellen Terminals erfolgen kann. In diesem Fall kein eine sehr sichere Datenübertragung gewährleistet werden. Alternativ kann die Telekommunikationsverbindung aber auch drahtlos mittels WLAN oder Daten- (Mobil-) Funkübermittlung (z.B. UMTS) hergestellt werden, was die Flexibilität des Verfahrens und den Bewegungsspielraum der wartenden Person deutlich erhöht.

In einer bevorzugten Ausführungsform des erfindungsgemäßen Verfahrens stellt der Anbieter dem Wartenden einen QR-Code in optisch lesbarer Form zur Verfügung, wobei der QR-Code zumindest die Daten bezüglich der Adresse (z.B. URL= Uniform Resource Locator) des Anbieters und einer Warteschlangennummer des Wartenden umfasst. Der Wartende liest den QR-Code dann in ein mobiles Datenkommunikationsgerät ein, wobei der QR-Code in dem Datenkommunikationsgerät decodiert wird. Mittels der Daten, die in der decodierten Information enthalten sind, wird eine drahtlose Netzwerkverbindung mit einer Datenverarbeitungseinrichtung des Anbieters hergestellt, wobei die Daten an die Datenverarbeitungseinrichtung versendet und dort verarbeitet werden, und wobei die Datenverarbeitungseinrichtung die voraussichtliche Wartezeit auf das Datenkommunikationsgerät des Wartenden überträgt.

Die Aufgabe wird ferner durch eine Datenkommunikationsanlage gelöst, die mindestens eine Datenverarbeitungseinrichtung zur Verwaltung von Warteschlangen, mindestens eine Ausgabevorrichtung für codierte Informationen und mindestens ein Datenkommunikationsgerät zum Erfassen und Verarbeiten der codierten Informationen umfasst, wobei das Datenkommunikationsgerät mit der Datenverarbeitungseinrichtung über eine Telekommunikationsverbindung verbindbar ist.

Die Ausgabevorrichtung sollte eine Anzeigeeinrichtung bzw. Display sein, welche die vorzugsweise zweidimensionale Darstellung der codierten Information und ein Einlesen dieser Information in ein geeignetes Lesegerät, beispielsweise einen Scanner oder eine Kamera, ermöglicht. Vorzugsweise ist die Ausgabevorrichtung ein Drucker oder ein Monitor, der eine gut lesbare Anzeige des Codes gewährleistet. Alternativ könnte die Ausgabevorrichtung beispielsweise aber auch einen Transponder (z.B. RFID-Element) zur Verfügung stellen bzw. ausgeben. Die Ausgabevorrichtung und/oder die Datenverarbeitungseinrichtung zur Verwaltung von Warteschlangen ist vorzugsweise mit einer Software zum Generieren der codierten Information, beispielsweise einer Software zum Generieren von QR-Codes, ausgestattet. Als Drucker für Wartemarken können beispielsweise Matrixdrucker eingesetzt werden, so dass sich beispielsweise ein zweidimensionale QR-Code mit der bestehenden Infrastruktur zusätzlich auf den Märkchen ausdrucken lässt.

In besonders vorteilhafter Ausgestaltung der Erfindung ist ein Lesegerät zum Erfassen der codierten Informationen vorgesehen. Das Lesegerät kann beispielsweise ein Scanner, eine Kamera, ein Kurzstrecken-Datenfunkempfänger (z.B. Bluetooth) oder ein RFID-Empfänger sein.

Das Datenkommunikationsgerät umfasst vorzugsweise das Lesegerät zum Einlesen der codierten Information und kann darüber hinaus mit einer Software ausgestattet sein, die ein Decodieren und Verarbeiten der codierten Information ermöglicht. Da beispielsweise QR-Codes bereits vielfach in der Produktwerbung und zur Anzeige von Hintergrundinformationen in Tageszeitungen und Fachzeitschriften zum Einsatz kommen, ist die Software zum Generieren der QR-Codes allgemein verfügbar und die QR-Software für Mobilfunkgeräte bereits weit verbreitet. Das Datenkommunikationsgerät ist daher vorzugsweise ein Mobiltelefon, ein Smartphone oder ein Personal Digital Assistant (PDA).

Zum Aufbau einer Telekommunikationsverbindung weisen das Datenkommunikationsgerät und die Datenverarbeitungseinrichtung vorzugsweise jeweils mindestens eine Netzwerkschnittstelle auf. Dabei ist die Netzwerkschnittstelle vorzugsweise eine Drahtlosschnittstelle, insbesondere eine WLAN- oder eine Daten- (Mobil-) Funkübermittlungs- (z.B. UMTS-) Schnittstelle, so dass die Flexibilität der Datenkommunikationsanlage und der Bewegungsspielraum der wartenden Person deutlich erhöht werden können.

Die Erfindung betrifft ferner die Verwendung der erfindungsgemäßen Datenkommunikationsanordnung zur Übertragung einer voraussichtlichen Wartezeit von einem Anbieter von Waren und/oder Dienstleistungen zu einem Wartenden.

Die Erfindung betrifft auch die Verwendung mindestens eines QR-Codes zur Information von Wartenden, wobei die Information die voraussichtliche Wartezeit umfasst.

Die Erfindung wird im weiteren anhand der Abbildungen beispielhaft näher erläutert.
Figur 1 zeigt ein Flussdiagram einer bevorzugten Ausführungsform des erfindungsgemäßen Verfahrens.
Figur 2 zeigt eine schematische Darstellung einer beispielhaften Ausführungsform der erfindungsgemäßen Datenkommunikationsanordnung.

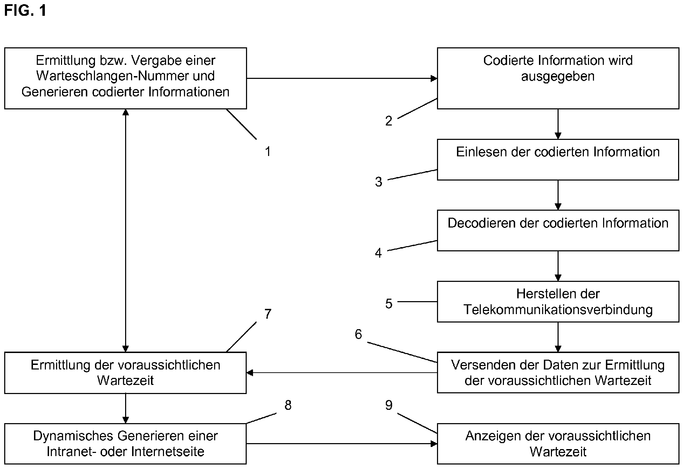

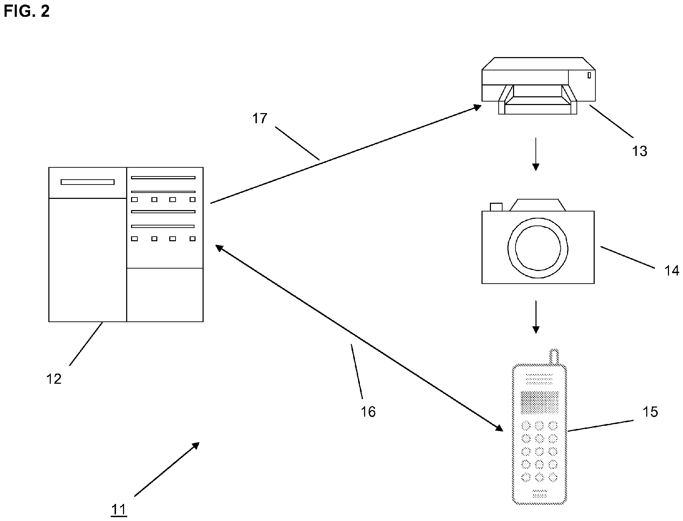

Die Figuren 1 und 2 veranschaulichen die Erfindung anhand beispielhafter und bevorzugter Ausführungsformen des erfindungsgemäßen Verfahrens (Verfahrensschritte 1 bis 9 in Figur 1) und der erfindungsgemäßen Datenkommunikationsanordnung (Bezugsziffern 11 bis 17 in Figur 2). Die Datenkommunikationsanordnung 11 umfasst eine Datenverarbeitungseinrichtung 12 zur Verwaltung von Warteschlangen (Warteschlangen-System), eine Ausgabevorrichtung 13 für codierte Informationen, ein Lesegerät 14 zum Erfassen der codierten Informationen und ein Datenkommunikationsgerät 15 zum Verarbeiten der codierten Informationen und zur Herstellung einer Telekommunikationsverbindung 16 mit der Datenverarbeitungseinrichtung 12. Bei der Datenverarbeitungseinrichtung 12 handelt es sich vorzugsweise um eine klassische EDV-Anlage (Server), die von einem Anbieter von Waren und/oder Dienstleistungen betrieben bzw. genutzt wird.

Die Datenverarbeitungseinrichtung 12 ist mit einer Software ausgestattet, die ein Verwalten einer Warteschlange ermöglicht. In Schritt 1 einer bevorzugten Ausführungsform des erfindungsgemäßen Verfahrens wird durch die Datenverarbeitungseinrichtung 12 eine Warteschlangen-Nummer vergeben und anhand dieser Warteschlangen-Nummer eine codierte Information generiert. Bei dieser codierten Information kann es sich beispielsweise um einen zweidimensionalen Code, vorzugsweise um einen QR-Code, handeln.

Die codierte Information (z.B. ein QR-Code) wird von der Datenverarbeitungseinrichtung 12 über die Datenleitung 17 an die Ausgabevorrichtung 13 gesendet und in Schritt 2 von dieser angezeigt oder ausgedruckt. Bei der Ausgabevorrichtung 13 kann es sich beispielsweise um einen Monitor oder, wie bei dem in Figur 2 dargestellten Ausführungsbeispiel, um einen Drucker handeln. Es könnte aber beispielsweise auch eine Ausgabevorrichtung für RFID-Elemente eingesetzt werden. So wird beispielsweise auf einem Märkchen, das ein Kunde zu Beginn der Wartezeit zieht, ein QR-Code ausgedruckt. In diesem zweidimensionalen Code können sowohl die Internet-Adresse des Warteschlangen-Systems als auch die relevanten Vorgangs-Informationen wie die gezogene Warteschlangen-Nummer und ggf. eine Kennung, für welche Dienstleistung und in welcher Zweigstelle er sich angemeldet hat, codiert sein.

In Schritt 3 wird die codierte Information durch den Kunden mittels des Lesegeräts 14 eingelesen bzw. erfasst. Bei dem Lesegerät 14 kann es sich beispielsweise um einen Scanner (Handscanner) oder, wie im gezeigten Beispiel, eine Kamera handeln. Alternativ kann aber auch ein Kurzstrecken-Datenfunkempfänger (z.B. Bluetooth) oder ein RFID-Empfänger verwendet werden. Das Lesegerät 14 kann als separates Gerät verwendet werden oder alternativ in das Datenkommunikationsgerät 15 integriert sein. Vorzugsweise ist das Lesegerät 14 eine in ein Mobiltelefon, Smartphone oder PDA integrierte Kamera. So kann der wartende Kunde beispielsweise mit der Kamera seines Mobiltelefons den QR-Code seiner Warteschlangen-Marke aufnehmen. Die codierte Information wird von dem Lesegerät 14 an das Datenkommunikationsgerät 15 weitergeleitet und dort verarbeitet.

In Schritt 4 wird die codierte Information in dem Datenkommunikationsgerät 15 decodiert und in Schritt 5 wird anhand der decodierten Information über die Telekommunikationsverbindung 16 eine Verbindung zwischen dem Datenkommunikationsgerät 15 und der Datenverarbeitungseinrichtung 12 hergestellt. Die QR-Software auf dem Mobiltelefon decodiert beispielsweise die im QR-Code enthaltenen Informationen und baut anhand dieser Informationen, die vorzugsweise die Warteschlangen-Nummer und die Adresse (URL) der Datenverarbeitungseinrichtung 12 umfassen, eine Verbindung zum Warteschlangen-Server des Dienstleisters auf. Dabei handelt es sich vorzugsweise um eine Internetverbindung.

Die zur Ermittlung der voraussichtlichen (verbleibenden) Wartezeit erforderlichen Daten, welche die Warteschlangen-Nummer und ggf. Zusatzinformationen als Parameter umfassen, werden in Schritt 6 über die Telekommunikationsverbindung 16 an die Datenverarbeitungseinrichtung 12 übermittelt.

In Schritt 7 ermittelt die Datenverarbeitungseinrichtung 12 für die übertragenen Parameter, also vorgangsspezifisch, aus den vorliegenden statistischen Daten zur Abarbeitung der vorgangsbezogenen Warteschlange fortlaufend den erwarteten Zeitpunkt des Kundenkontakts bzw. die voraussichtlich verbleibende Wartezeit. Diese Daten werden in Schritt 8 durch die Datenverarbeitungseinrichtung 12 zu einer kundenbezogenen Intranet- oder Internet-Anzeigeseite mit dynamisch erzeugtem Inhalt aufbereitet, die auf das Datenkommunikationsgerät 15 der wartenden Person übertragen wird, von dem sie in Schritt 9 angezeigt werden. Dabei können die Verfahrensschritte 5 bis 9 in zeitlichen Abständen auf Veranlassung der wartenden Person beliebig oft wiederholt werden. Da die angezeigten Daten, abhängig vom Abbau der Warteschlange, fortwährend angepasst werden, ist die wartende Person kontinuierlich informiert und kann ihre Aktivitäten und ihren Aktionsradius flexibel darauf einstellen.

## Patentansprüche

1. Verfahren zur Kommunikation zwischen einem Anbieter von Waren und/oder Dienstleistungen und einem Wartenden, wobei die Kommunikation über mindestens eine drahtlose Telekommunikationsverbindung (16) erfolgt und eine Übertragung des Zeitpunktes des voraussichtlichen Kundekontaktes und/oder der voraussichtlichen Wartezeit zum Wartenden umfasst, wobei der Wartende eine codierte Information decodiert, die Daten zur Ermittlung der Wartezeit umfasst, wobei die decodierte Information die nötigen Informationen zur Herstellung der drahtlosen Telekommunikationsverbindung (16) mit dem Anbieter umfasst, dass der Wartende die drahtlose Telekommunikationsverbindung (16) mittels eines mobilen Datenkommunikationsgerätes, nämlich eines Mobiltelefons, eines Smartphones oder eines PDA, und mittels der decodierten Information herstellt und Daten zur Ermittlung des Zeitpunktes des voraussichtlichen Kundekontaktes und/oder der voraussichtlichen Wartezeit über die drahtlose Telekommunikationsverbindung (16) an den Anbieter versendet, dass der Anbieter fortlaufend den Zeitpunkt des voraussichtlichen Kundekontaktes und/oder die voraussichtliche Wartezeit anhand dieser Daten ermittelt und diese Daten über die drahtlose Telekommunikationsverbindung zum mobilen Datenkommunikationsgerät des Wartenden überträgt,
**dadurch gekennzeichnet, dass**
diese Daten umfassend den Zeitpunkt des voraussichtlichen Kundekontaktes und/oder die voraussichtliche Wartezeit durch die Datenverarbeitungseinrichtung 12 zu einer kundenbezogenen Intranet- oder Internet Anzeigeseite mit dynamisch erzeugtem Inhalt aufbereitet und auf das mobile Datenkommunikationsgerät des Wartenden übertragen und angezeigt werden.

2. Verfahren nach Anspruch 1,
**dadurch gekennzeichnet, dass**
die codierte Information dem Wartenden durch den Anbieter und/oder beim Anbieter, vorzugsweise optisch lesbar, zur Verfügung gestellt wird.

3. Verfahren nach einem der vorhergehenden Ansprüche,
**dadurch gekennzeichnet, dass**
der Wartende die codierte Information in digitaler Form erfasst und mittels Datenverarbeitung automatisch decodiert.

4. Verfahren nach einem der vorhergehenden Ansprüche,
**dadurch gekennzeichnet, dass**
die codierte Information in einem zweidimensionalen Code, vorzugsweise einem QR-Code, abgelegt ist.

5. Verfahren nach einem der vorhergehenden Ansprüche,
**dadurch gekennzeichnet, dass**
die Telekommunikationsverbindung (16) eine Netzwerkverbindung ist, vorzugsweise eine Intranet- oder Internetverbindung.

6. Verfahren nach einem der vorhergehenden Ansprüche,
**dadurch gekennzeichnet, dass**
die Telekommunikationsverbindung (16) mittels WLAN oder Daten-Funkübermittlung hergestellt wird.

7. Verfahren nach einem der Ansprüche 4 bis 6,
**dadurch gekennzeichnet, dass**
der Anbieter dem Wartenden einen QR-Code in optisch lesbarer Form zur Verfügung stellt, wobei der QR-Code zumindest die Daten bezüglich der Adresse des Anbieters und einer Warteschlangennummer des Wartenden umfasst, der Wartende den QR-Code in ein mobiles Datenkommunikationsgerät (15) einliest, wobei der QR-Code in dem Datenkommunikationsgerät (15) decodiert wird, mittels der Daten eine drahtlose Netzwerkverbindung mit einer Datenverarbeitungseinrichtung (12) des Anbieters hergestellt wird, wobei die Daten an die Datenverarbeitungseinrichtung (12) versendet und dort verarbeitet werden, und wobei die Datenverarbeitungseinrichtung (12) die voraussichtliche Wartezeit auf das Datenkommunikationsgerät (15) des Wartenden überträgt.

8. Datenkommunikationsanordnung (11) zur Durchführung des Verfahrens nach einem der Ansprüche 1 bis 7, aufweisend mindestens eine Datenverarbeitungseinrichtung (12) zur Verwaltung von Warteschlangen, mindestens eine Ausgabevorrichtung (13) für codierte Informationen, wobei mindestens ein mobiles Datenkommunikationsgerät (15), nämlich ein Mobiltelefon, ein Smartphone oder ein PDA, zum Erfassen und Verarbeiten der codierten Informationen, wobei das mobile Datenkommunikationsgerät (15) mit der Datenverarbeitungseinrichtung (12) über eine drahtlose Telekommunikationsverbindung (16) zur Übertragung der decodierten Information verbindbar ist,
wobei die Datenverarbeitungseinrichtung (12) eingerichtet ist zur fortlaufenden Ermittlung des Zeitpunktes des voraussichtlichen Kundekontaktes und/oder der voraussichtlichen Wartezeit und zur Übertragung dieser Daten über die drahtlose Telekommunikationsverbindung zum mobilen Datenkommunikationsgerät des Wartenden,
**gekennzeichnet durch**
die Datenverarbeitungseinrichtung (12) eingerichtet ist, diese Daten umfassend den Zeitpunkt des voraussichtlichen Kundekontaktes und/oder die voraussichtliche Wartezeit einer kundenbezogenen Intranet- oder Internet Anzeigeseite mit dynamisch erzeugtem Inhalt aufzubereiten und auf das mobile Datenkommunikationsgerät des Wartenden zu übertragen.

9. Datenkommunikationsanordnung nach Anspruch 8,
**dadurch gekennzeichnet, dass**
ein Lesegerät (14) zum Erfassen der codierten Informationen vorgesehen ist.

10. Datenkommunikationsanordnung nach Anspruch 9,
**dadurch gekennzeichnet, dass**
das mobile Datenkommunikationsgerät (15) das Lesegerät (14) umfasst.

## Claims

1. Method for communication between a supplier of goods and/or services and a waiting person, wherein the communication takes place via at least one telecommunications connection (16) and comprises transmission of the time of the estimated customer contact and/or the estimated waiting time to the waiting person, wherein the waiting person decodes a coded information item which comprises data for determining the waiting time,
wherein the decoded information comprises the information necessary for producing the wireless telecommunications connection (16) to the supplier,
that the waiting person establishes the wireless telecommunications connection (16) by means of a mobile data communication device, namely a mobile telephone, a smartphone or a PDA and by means of the decoded information, and sends data for determining the time of the estimated customer contact and/or the estimated waiting time over the wireless telecommunications connection (16) to the supplier,
that on the basis of these data the provider continuously determines the time of the estimated customer contact and/or the expected waiting time and transmits these data over the wireless telecommunications connection to the mobile data communication device of the waiting person,
**characterized in that**
these data comprising the time of the estimated customer contact and/or the estimated waiting time are processed by means of the data processing device (12) into a customer-related intranet or Internet display page with dynamically generated content, and transmitted to and displayed on the mobile data communication device of the waiting person.

2. Method according to Claim 1,
**characterized in that**
the coded information is provided to the waiting person by the provider and/or at the supplier's, preferably in optically readable form.

3. Method according to any of the previous claims,
**characterized in that**
the waiting person records the coded information in digital form and automatically decodes it by means of data processing.

4. Method according to any of the previous claims,
**characterized in that**
the coded information is stored in a two-dimensional code, preferably a QR code.

5. Method according to any of the previous claims,
**characterized in that**
the telecommunications connection (16) is a network connection, preferably an intranet or internet connection.

6. Method according to any of the previous claims,
**characterized in that**
the telecommunications connection (16) is established via WLAN or radio data transmission.

7. Method according to any one of Claims 4 to 6,
**characterized in that**
the provider provides the waiting person with a QR code in optically readable form, wherein the QR code comprises at least the data regarding the address of the provider and a queue position number of the waiting person, the waiting person reads the QR code into a mobile data communication device (15), wherein the QR code is decoded in the data communication device (15), by means of the data a wireless network connection is established to a data processing device (12) of the provider, wherein the data are sent to the data processing device (12) and processed there, and wherein the data processing device (12) transmits the estimated waiting time to the data communication device (15) of the waiting person.

8. Data communication arrangement (11) for carrying out the method according to any one of Claims 1 to 7, comprising at least one data processing device (12) for managing waiting queues, at least one output device (13) for coded information,
wherein at least one mobile data communication device (15), namely a mobile telephone, a smartphone or a PDA, for recording and processing the coded information, wherein the mobile data communication device (15) can be connected to the data processing device (12) via a wireless telecommunications connection (16) for transmitting the decoded information,
wherein the data processing device (12) is set up for continuously determining the time of the estimated customer contact and/or the estimated waiting time and for transmitting these data via the wireless telecommunications connection to the mobile data communication device of the waiting person,
**characterized by**
the data processing equipment (12) is set up to process these data comprising the time of the estimated customer contact and/or the expected waiting time for a customer-related intranet or internet display page with dynamically generated content and to transmit them to the mobile data communication device of the waiting person.

9. Data communication arrangement according to Claim 8,
**characterized in that**
a reader device (14) is provided for recording the coded information.

10. Data communication arrangement according to Claim 9,
**characterized in that**
the mobile data communication device (15) comprises the reader device (14).

## Revendications

1. Procédé pour la communication entre un fournisseur de biens et/ou de services et quelqu'un qui attend, dans lequel la communication s'effectue via au moins une liaison de télécommunications sans fil (16) et comprend une transmission du moment du contact client probable et/ou du temps d'attente probable à celui qui attend, dans lequel celui qui attend décode une information codée comprenant des données pour la détermination du temps d'attente,
dans lequel l'information décodée comprend les informations nécessaires pour l'établissement de la liaison de télécommunications sans fil (16) avec le fournisseur, celui qui attend établissant la liaison de télécommunications sans fil (16) au moyen d'un appareil de communication de données mobile, à savoir un téléphone mobile, un Smartphone ou un assistant numérique personnel, et au moyen de l'information décodée, et envoyant des données au fournisseur pour la détermination du moment du contact client probable et/ou du temps d'attente probable via la liaison de télécommunications sans fil (16),
le fournisseur déterminant en continu le moment du contact client probable et/ou le temps d'attente probable à l'aide de ces données, et transmettant ces données à l'appareil de communication de données mobile de celui qui attend via la liaison de télécommunications sans fil,
**caractérisé en ce que**
ces données, comprenant le moment du contact client probable et/ou le temps d'attente probable, sont préparées par le dispositif de traitement de données (12) pour donner une page d'affichage Intranet ou Internet spécifique au client avec un contenu généré dynamiquement et sont transmises à l'appareil de communication de données mobile de celui qui attend et sont affichées.

2. Procédé selon la revendication 1,
**caractérisé en ce que**
les informations codées sont mises à disposition de celui qui attend par le fournisseur et/ou chez le fournisseur, de préférence de manière optiquement lisibles.

3. Procédé selon l'une des revendications précédentes,
**caractérisé en ce que**
celui qui attend recueille les informations codées sous une forme numérique et les décode automatiquement au moyen d'un traitement de données.

4. Procédé selon l'une des revendications précédentes,
**caractérisé en ce que**
l'information codée est déposée dans un code bidimensionnel, de préférence un code QR.

5. Procédé selon l'une des revendications précédentes,
**caractérisé en ce que**
la liaison de télécommunications (16) est une connexion réseau, de préférence une connexion Intranet ou Internet.

6. Procédé selon l'une des revendications précédentes,
**caractérisé en ce que**
la liaison de télécommunications (16) est établie au moyen d'un WLAN ou une transmission radio de données.

7. Procédé selon l'une des revendications 4 à 6,
**caractérisé en ce que**
le fournisseur met à disposition de celui qui attend un code QR sous forme optiquement lisible, dans lequel le code QR comprend au moins les données concernant l'adresse du fournisseur et un numéro de file d'attente de celui qui attend, celui qui attend récupérant le code QR dans un appareil de communication de données mobile (15), dans lequel le code QR est décodé dans l'appareil de communication de données mobile (15), une connexion réseau sans fil étant établie avec un dispositif de traitement de données (12) du fournisseur au moyen des données, dans lequel les données sont envoyées au dispositif de traitement de données (12) et y sont traitées, et dans lequel le dispositif de traitement de données (12) transmet le temps d'attente probable à l'appareil de communication de données (15) de celui qui attend.

8. Dispositif de communication de données (11) pour la mise en oeuvre du procédé selon l'une des revendications 1 à 7, présentant au moins un dispositif de traitement de données (12) pour la gestion de files d'attente, au moins un dispositif de sortie (13) pour des informations codées,
dans lequel au moins un appareil de communication de données mobile (15), à savoir un téléphone mobile, un Smartphone ou un assistant numérique personnel, pour recueillir et traiter les informations codées, dans lequel l'appareil de communication de données mobile (15) peut être connecté au dispositif de traitement de données (12) via une liaison de télécommunications sans fil (16) pour la transmission des informations décodées,
dans lequel le dispositif de traitement de données (12) est étudié pour la détermination en continu du moment du contact client probable et/ou du temps d'attente probable et pour la transmission de ces données via la liaison de télécommunications sans fil à l'appareil de communication de données mobile de celui qui attend,
**caractérisé par**
le dispositif de traitement de données (12) est étudié pour préparer ces données, comprenant le moment du contact client probable et/ou le temps d'attente probable, pour donner une page d'affichage Intranet ou Internet spécifique au client avec un contenu généré dynamiquement, et pour les transmettre à l'appareil de communication de données mobile de celui qui attend.

9. Dispositif de communication de données selon la revendication 8,
**caractérisé en ce que**
l'on prévoit un appareil de lecture (14) pour recueillir les informations codées.

10. Dispositif de communication de données selon la revendication 9,
**caractérisé en ce que**
l'appareil de communication de données mobile (15) comprend l'appareil de lecture (14).
